# EUROPEAN PATENT APPLICATION

(11) **EP 0 780 191 A1**
(43) Date of publication of application: **25.06.1997**
(21) Application number: 96500147.2
(22) Date of filing: 20.11.1996
(51) Int. Cl.: B23P 19/00, F17C 5/00, B67B 3/064

(54) **Seal installing machine preferably used on pressurized gas containers**

(30) Priority: 22.12.1995 ES 9502516
(71) Applicant: REPSOL BUTANO, S.A., 28015 Madrid (ES)
(72) Inventor: Méndez Rutllán, Andrés, 28100 Madrid (ES); Antunez Jiménez, José, 28529 Madrid (ES)
(74) Representative: Riera Blanco, Juan Carlos

(57) **Abstract**

A machine devised for the automatic installation of seals on the valves of containers (8) containing pressurized gas, particularly petroleum-derived liquid gases, whereby said seals are inserted in insertion heads (27,27') by means of push rods, said heads being attached to arms (5,5') which provide them with tilting and vertical movement to perform the inserting operation on the containers (8), a third head (34) being provided further along which is associated to a third arm in order to check the presence and inserting attachment of the seal, the containers being kept throughout the inserting and attachment control operations in a perfectly vertical position by means of pushing devices which keep them in place against a rear guide. Sensors are provided capable of recognizing at all times the position of the containers and thus determine the required operations.

## Description

### PURPOSE OF THE INVENTION

This invention relates to a seal installing machine used preferably on pressurized gas containers, particularly on petroleum-based liquid gases, which provides essentially novel 1 features in relation to known means used in the present state of the art.

The main object of the invention is the construction of a machine for installing seals on the above mentioned containers in an automatic and safe manner and according to a pre-establish operational sequence, as a result of which assurance is provided that all the containers leaving the machine carry the desired seal, or else, in the event of failure in the seal installing operation, the machine itself detects that a seal is missing on a specific container and diverts it to a course foreseen for "failing" containers. The machine of the invention is fitted with a hopper for storing the seals which descend through appropriate guides in order that tilting arms, preferably two arms, each receive a seal inside a respective inserting head fitted onto each arm to provide automatic installation of the seals over the valves of the containers which have been previously filled with gas and which enter the machine via an adequate conveyor, all the aforementioned operations being carried out according to a pre-established work sequence controlled through sensors spaced along the length of the machine, in positions corresponding to the path followed by the containers. As previously stated, each container is subject to a control operation which monitors the presence of a seal over the container valve and, based on the data obtained (container with or without a seal), is directed either to an exit or a recovery path. The invention further foresees that the operations of inserting the seals and verifying that the seals are in fact installed are advantageously performed with the containers arranged in a perfectly upright and precise manner, biasing means being provided to push the containers against a back guide so that they are conveniently centered and kept in place while these operations are in progress, further ensuring that all the containers are handled under the same condition.

The invention is generally applicable to industrial fields requiring the installation of seals on containers and, more specifically, to petroleum-derived liquid gas container filling operations.

### BACKGROUND OF THE INVENTION

The supply of containers containing pressurized gases - particularly petroleum liquid gases - provided with a protection seal on the valve, ensures the user that such containers have not been unduly manipulated and that their contents are therefore intact. Toward this end, the applicant possesses several types of seals particularly applicable for the types of containers being discussed, said seals providing a guarantee against violation of the contents unless they are destroyed and further providing a means of sealing the mouth of the gas outlet and thereby preventing the possibility of undesired gas leakages.

However, the installation of this type of seal on pressurized gas containers has normally been conducted manually, requiring large amounts of time and labor for the seal installation operation on the container valve and thus resulting in a substantial increase in production costs.

The present invention proposes the development and manufacture of a machine which solves the above problems and provides an efficient means of installing the seal on the valve of a container containing pressurized gas, particularly a gas deriving from petroleum, in a fully automatic manner and therefore not requiring hand labor, said machine being fitted with check means to detect a properly installed seal over the valve, in a way that if any of the containers is lacking a seal as a result of a given circumstance or malfunction, said container is diverted on to another direction upon reaching a preset position along the path followed by the containers.

### DESCRIPTION OF THE INVENTION

As stated above, the machine of the invention is fully automatic, installing two seals simultaneously on two containers once the containers have reached the work position and their presence has been detected by a sensor assembly.

The machine of the invention is composed of a seal storage hopper in which the seals are placed, in a known manner, with their mouths turned upwards, that is to say, in a position rotated 180° in respect to their installation position. The seals descend from the hopper by gravity through an adequate guide which overturns the seals and places them in the proper installation position, and then proceed to a distribution device provided with alternate horizontal motion, the length of which is limited between two end positions by means o a pneumatic cylinder or similar element. From the tips of this distribution device extend two new guides through which the seals descend, already placed in the correct inserting position, the free lower ends of these new guides finishing over cylinder rods that are preferably pneumatically operated, in a manner that the seal in the lowest position will be facing the cylinder rods and will be urged by them when the rods are activated. Said alternate motion distribution device alternatively directs each seal to one side or another, i.e. one seal towards each guide extending from respective ends.

The machine is furthermore fitted with two arms conveniently attached to its structure which are provided with movement along their vertical plane. Thus, each arm can pivot in respect to an intermediate attachment point in the general structure of the machine as a result of the action of a cylinder, preferably pneumatic, which pushes or retracts it through its upper end, and can also descend and return to its rest position by the action of another cylinder, preferably also pneumatically activated. Each of said arms is provided in the lower end thereof with a seal receiving head (inserting head) - for placing a seal over the valve of a container - inside of which are lodged conventional retention means for the seal being inserted. The upper end of the arm is fitted with at least one sensor for detecting the position of each arm (extended position or rest position).

However, as an alternative embodiment foreseen in the present invention, each of said arms could comprise a rod internally extending throughout the length of the arm, the lower end of the rod being preferably lodged inside the seal receiving head and the upper end of the rod acting on the sensor means, in a manner that the rod may be used for the double purpose of sensing if a seal inside the inserting head is ready to be installed and also to act as a seal pushing means when the seal is inserted over the container valve.

A third arm is provided further along the two previously mentioned arms, fitted with a head for attaching and controlling the presence of a seal over the container valve and which has a vertical ascending/descending motion designed to check if the container reaching its position is fitted with a corresponding seal over its valve, for which the head, made of some adequate electrically conductive material, such as brass, is provided with conductor plates which, in the event that a seal is missing and as the plates rest on the metal container valve, close the electrical circuit and detect the lack of a seal. If, on the other hand, the container if correctly fitted with a seal, the machine detects this in view that the seal is made of insulating material (e.g. an appropriate plastic material) so that as the conductor plates rest on the nonconductive seal the electric circuit is kept open; thus, with the pressure exerted by this head over the upper part of the seal, full insertion and subsequent attachment to the valve is ensured. Once the presence or lack of a seal over the valve is detected, the machine automatically sends the container along the appropriate direction. The container is kept on its checking position by means of a brake which can be extended or retracted preferably by means of a pneumatic cylinder.

As previously stated, two perfectly distinct movements occur in each inserting arm, namely a pivoting movement through which the lower head of the arm is positioned opposite the cylinder that pushes the seals that are waiting in place, and a descending movement by means of which the lower head is offset vertically downwards to place the seal contained inside the head - as a result of the previous operation - on the valve of a container containing pressurized gas.

Furthermore, the machine of the invention is fitted with a set of sensors distributed along the path followed by the containers, said sensors being precisely activated by the passing of the containers, in a way that the machine detects at all times the presence and location of the containers. Thus, automatic operation of the machine is made possible when two containers are positioned with their valves just under respective inserting arm heads, the two containers being retained at that very moment by respective brakes which are likewise controlled by the conveyor sensors. There is an additional brake which stops eventual containers reaching the work area (area where the seals are being installed) while the seal installing operation is in progress on the two previous containers, one for each arm. In the event that one or both arms are lacking a seal, a situation that would be detected on reaching the head associated to the third arm after being freed by the corresponding brakes from the seal inserting positions, an ejection device is activated for urging the container or containers without seals and diverting them onto another course for subsequent handling, as necessary. The operation of said ejection device is also controlled by one of the above mentioned sensors.

In order to correctly position each container both in the spot required for inserting the seal and for checking that the seal is in place on the container, the invention contemplates the use of positioning means comprising extending arms preferably activated by a pneumatic cylinder, each arm being provided with a pair of front longitudinal overlapping elements that incorporate end rollers. In each work post, e.g. in a seal inserting position, the extensible arm in each post is automatically activated and moves both respectively associated front longitudinal elements towards the inside of the path followed by the containers, embracing each container in two arcs located at different heights and pushing it against the rear - or inner - guide parallel to the course followed by the containers. Container verticality is thus ensured while the seal inserting operation or the seal check is in progress at that particular work post.

### BRIEF DESCRIPTION OF THE DRAWINGS

The drawings attached to this description, which are presented as examples and are therefore of a non-limiting nature in any sense, are a preferred form of embodiment of the object of the invention. In the drawings:

Figure 1 shows a schematic plane view of the seal installing machine of the invention.

Figure 2 is a perspective, partly diagrammatic, view of the machine of the invention, showing the seal inserting arms with their operating means, the seal guides, the seal checking arm and the location of the sensors and brakes provided by the invention.

Figure 3 is a side elevation view of one of the seal installing arms, in further detail, which also shows in dotted line the position of the lower seal receiving arm head.

Figure 4 illustrates, in a schematic manner, the relative positioning between the pushing-centering means and the container which at that very moment is positioned in front of said means.

Figure 5 is a diagram showing the operational sequence of the machine of the invention.

### DESCRIPTION OF A PREFERRED EMBODIMENT

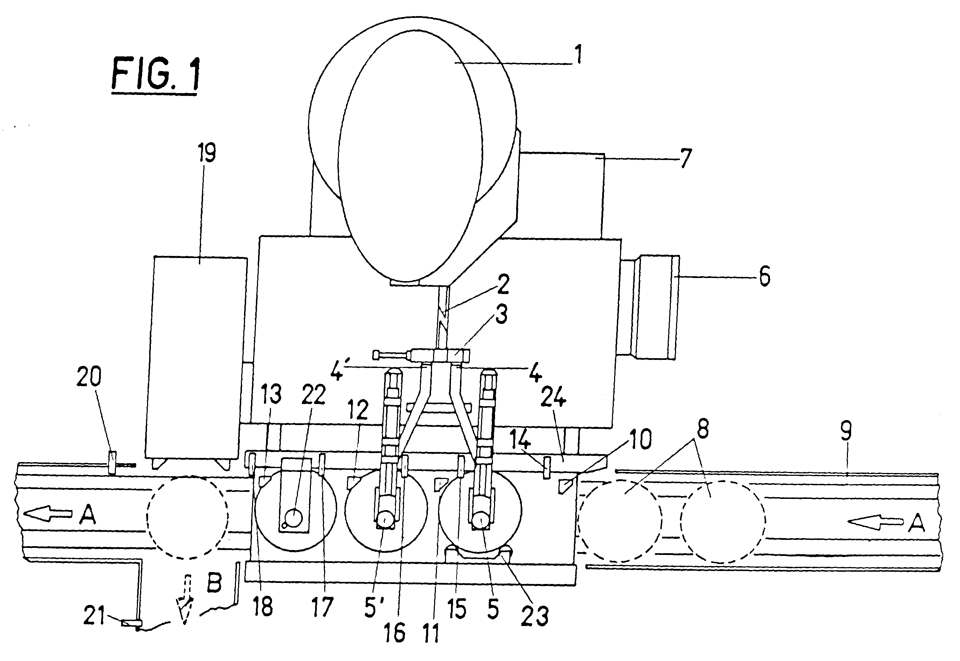

With reference first to Figure 1 of the drawings, a schematic plane view shows the seal installing machine proposed by the invention. Said Figure 1 shows, in the form of parts integrated in said machine, a hopper (1) for storing the seals, in which said seals are oriented in a known manner so that their mouths face upwards, that is to say, rotated 180° in respect to their installing position. From hopper (1) the seals descend through a guide (2) which turns around itself and provides the seals descending along said guide with a 180° rotation, so that when the seals reach the distribution device (3) their position is already inverted and they are in the right, or installing, position. From the distribution device (3) extend two descending secondary guides (4, 4'), one from each end, along which the seals drop down to a position where they are collected by the lower (inserting) heads fitted onto the arms (5, 5'), as can be appreciated in subsequent figures. Further from both arms fitted with the seal inserting heads, the machine is fitted with a third arm (22) equally provided with a lower head designed to check the presence of the seal on the valve of the containers (8) which successively reach its position. The machine is also fitted with an electric cabinet (6) and a pneumatic cabinet (7) for respectively housing the various electrical and pneumatic devices needed for the correct operation of the machine but which are not described in view that they are of a conventional type.

As can be appreciated form this same Figure 1, the machine of the invention is located over the path followed by the containers or bottles (8) containing pressurized gas, namely over the conveyor chain (9) which carries the gas filled containers in the direction marked by arrows A-A, so that the bottles (8) receiving the seals are required to advance under the arms (5, 5', 22) of the machine.

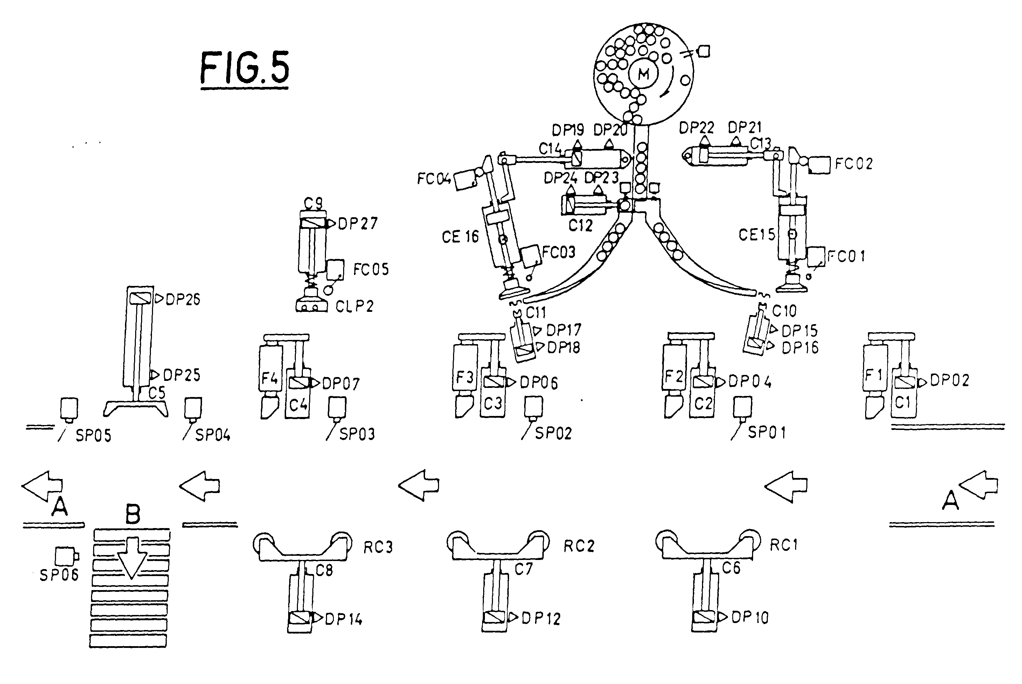

According to the invention, the machine will be provided with the braking mechanisms shown schematically and identified by (10), (11), (12) and (13), plus sensing devices identified by (14), (15), (16), (17) and (18) which are activated by the containers (8) as they proceed along the various positions that determine the machine's overall operational sequence, as can be seen particularly in regard to Figure 5 of the drawings. Likewise, these sensors control the operation of an ejecting mechanism (19) which urges and diverts in the direction of arrow B any bottle lacking a seal. Also, a sensor (20) is provided further along from the ejecting mechanism (19), in the exit direction for the correct containers, and another sensor (21) is provided in the diverted direction followed by the containers without seals.

Furthermore, in positions correspondingly opposite both seal inserting arms (5, 5') and the seal checking arm (22), container (8) pushing mechanisms (23) are provided - of which only one is shown, facing arm (5), in order to simplify the drawing - by means of which the containers are centered under the respective arm (5, 5', 22) heads when urged against the back guide running parallel to direction A-A, namely the path followed by the containers (8).

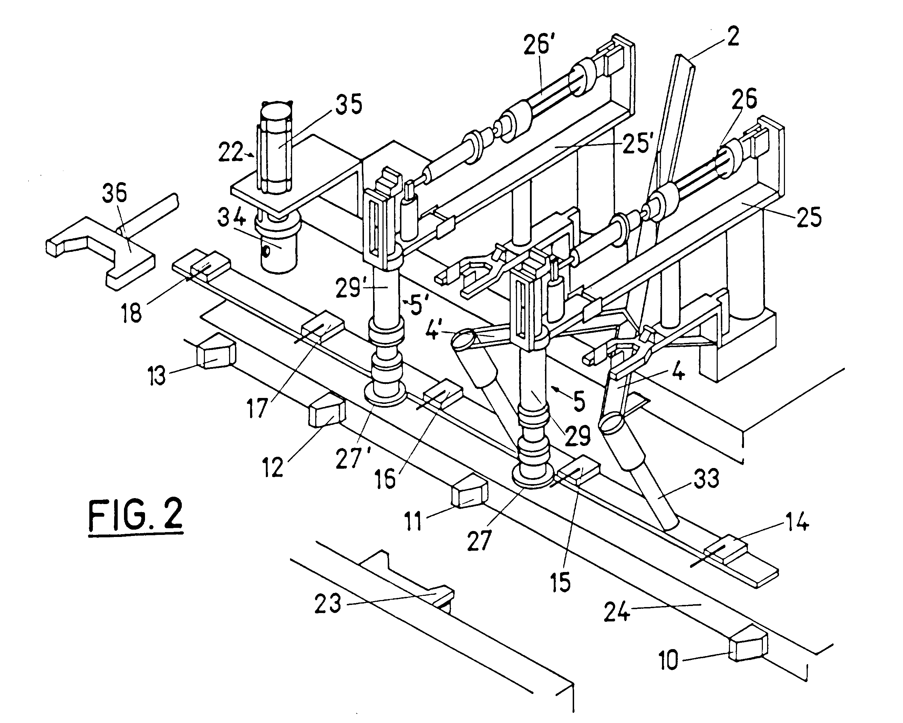

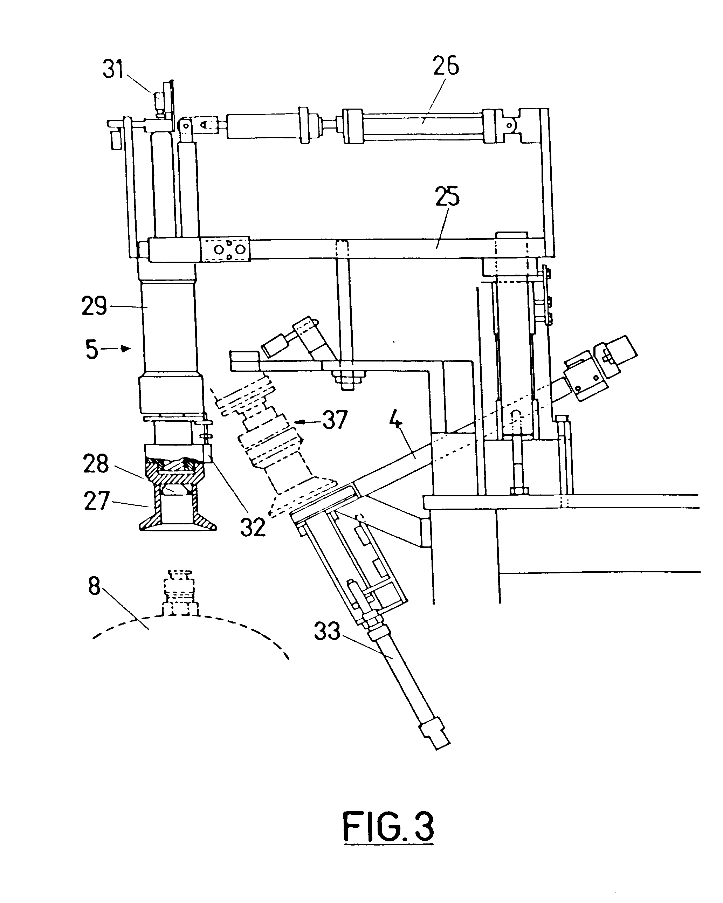

With reference now to Figures 2 and 3 of the drawings, the first of these figures is a perspective view of the movable arms and mechanisms designed to place the corresponding seal on each container (8) containing pressurized gas, and of the position of arm (22) located further along the two seal inserting arms; the second of these figures shows a lengthwise cut in one of the arms (5). According to both figures, each arm (5, 5') is hinged to and tilts with a machine structure rod (25, 25'), the upper end of each arm being attached to the shank of a pneumatic cylinder (26, 26'). The lower end of each arm (5, 5') is fitted with a hollow head (27, 27') designed to receive in it the seal (28), each head (27, 27') being capable of moving vertically as a result of the action exerted by a pneumatic cylinder (29, 29') fitted to each arm. Inside each inserting head (27, 27') are conventional seal retaining means, and at the upper end of each arm is fitted a sensor (31) activated by the arm itself through its vertical movement. Likewise, sensor means (32) are provided which can be operated by the head (27) itself through its vertical movement.

Both the above mentioned figures also reveal that the secondary guides (4, 4') which extend from the distributor device (3) finish on their respective lower ends over pneumatic cylinder (33, 33') shanks, said cylinders being installed in a slanting position with their longitudinal axes coinciding with the arm axes when the latter pivot in relation to their attachment points to supporting bars (25). Finally, and in regard specifically to Figure 2, said figure shows the relative position of the brakes (10 to 13) and the passing sensors (14 to 18) described in Figure 1.

Furthermore, Figure 2 shows the position of arm (22), which is fitted with a lower head (34) for detecting the presence and attachment of a seal, said head being provided with vertical movement and being capable of adapting itself to a container valve with a corresponding seal. This vertical movement is preferably conducted through a pneumatic cylinder (35), as called for by the work sequence - i.e. when a container, following a seal installing operation at the post corresponding to an inserting head (27, 27'), advances and reaches a position opposite said head (34). Sensor (17) and brake (13) are associated to the operation of this head. Also shown schematically in this figure is an element (36) in the form of an "ejecting" arm acting on the containers lacking a seal, designed to divert the container movement direction on to some other preset course.

From the preceding description for Figures 1 to 3, any expert on the subject may readily understand the operation of the machine proposed by the present invention, as set forth hereunder:

The containers (8) containing pressurized gas are fed to the machine by means of a conveyor chain (9) . In view that the machine if fitted with two work arms (5, 5'), the seal installing operation is performed simultaneously on two containers (8), one for each arm. To accomplish this, the inserting head (27, 27') in each arm must first be loaded with a seal (28), and thus cylinder (26) extends its shank (see Figure 2) and pushes on the upper end of the arm (5) to make it pivot on its attachment to bar (25) until it reaches position (37), depicted by discontinuous line, in which head (27) is positioned exactly opposite the shank of cylinder (33); at that point, said cylinder (33) extends its shank and pushes the seal positioned over it at the lower end of guide (4), this seal being lodged and retained inside head (27) at the position shown in (28) . Subsequently, cylinder (26) causes arm (5) to pivot in the opposite direction, sending it back to its vertical position. This same operational sequence is applicable to the other arm (5'), associated to guide (4') and cylinder (33').

With the heads (27, 27') on both arms each prepared with a seal (28) inside them, the machine is ready to install the seals over the valves of the first containers. Said containers (8) activate the various sensors (14 to 18) along their path in order to carry out the various stages of the process, so that, according to the sequence which will later be described in relation to Figure 5, when the two containers occupy the position shown in Figure 1, in which their respective valves are opposite the heads (27, 27') of arms (5, 5'), both containers are stopped by the corresponding braking mechanisms (11, 12) and simultaneously pushed by the pushing means (23) against rear guide (24), whereby the container (8) valves are exactly opposite the heads (27, 27') and the position of the containers if entirely vertical, the cylinders (29, 29') then determining the descent of said heads (27, 27'), each valve being housed inside the respective head and each seal (28) being installed on each valve as a result of the pressure exerted by the inserting head (27, 27') fitted on the corresponding inserting arm. Subsequently, cylinders (29, 29') set the elevation of heads (27, 27'), with the brakes (11, 12) which retained both containers (8) withdrawing sequentially, whereby each container is made to advance by means of chain (9) and thus proceeds on its normal course. Then, when each container reaches the position opposite head (34) of arm (22) designed to check the seal's presence and attachment, the corresponding brake (13) retains said container and simultaneously activates the corresponding pushing element (23) (not shown), centering the container just under said head and positioning it upright, after which, and by virtue of the data received through sensor (17) which has detected said position, a signal is emitted to cause operation of cylinder (35), thereby lowering said head (34) in order that, firstly, a verification is made as to whether the container is fitted with its corresponding seal and, secondly, if this is confirmed, the pressure exerted by head (34) ensures full insertion of the seal on the associated valve. In the event that head (34) detects the presence of the seal by establishing an open circuit between its electrical conductive plates, the container is made to advance - after being liberated both from the brake (13) and from the pushing means associated to this work position - along the exit direction indicated by arrow A, while, on the contrary, if head (34) detects the lack of a seal when its conductor plates contact the metal valve of the container thereby establishing a closed electrical circuit between said plates, the container is likewise liberated in the described manner, although upon reaching the position facing ejecting element (36) - detected by sensor (18) - said ejecting element (36) is activated and pushes the container (8) in a direction transversal to that of the path of belt (9), i.e. the direction or arrow B over a second roller belt designed to recover the container for subsequent installation of a seal. As a safety measure, a sensor (21) is provided which, in the event that several rejected containers are accumulated and diverted in excess of a preset number in direction B, warns of this occurrence and causes the machine to stop until said malfunction is corrected.

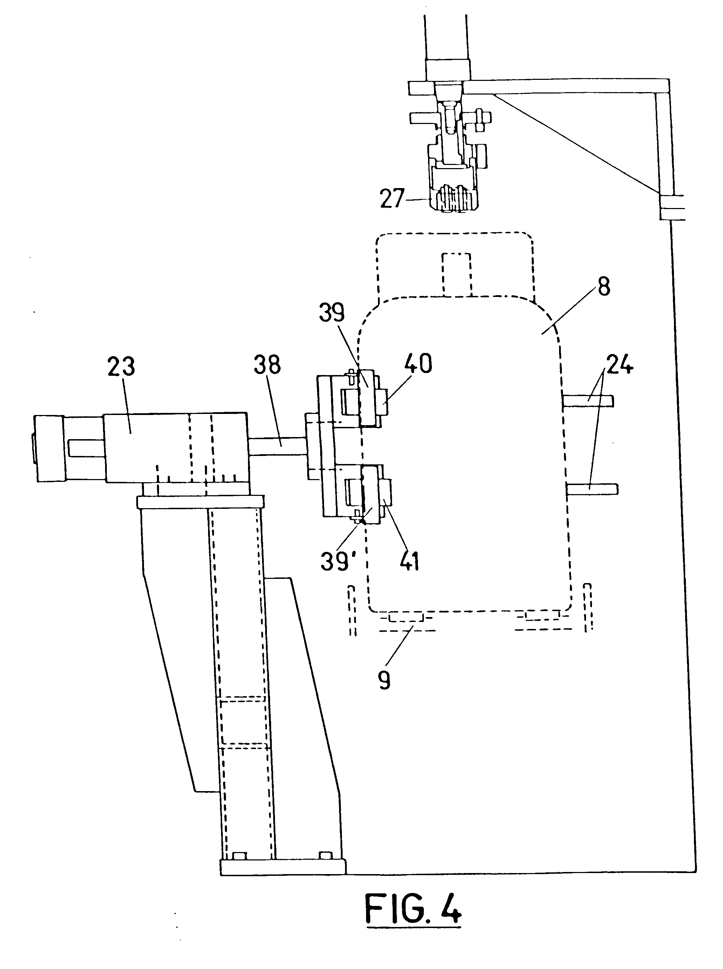

Concerning Figure 4, it shows a schematic view of the position of a pushing-centering means (23) acting on container (8), of the type provided for any of the work positions facing each arm (5, 5', 22). Said means (23) is directly supported by the machine's structure and is fitted with an frontally extensible rod (38) that is preferably activated by a pneumatic cylinder (39). This rod (38) is attached on its front portion to two longitudinal elements (39, 39') which support rollers (40, 41) on each end. Both longitudinal elements and associated rollers are correspondingly superimposed at a preset distance, the front profile of said elements (39, 39') being undercut (as can be seen graphically in Figure 1) so that it adapts itself to the circumference shape of the container (8) and "embraces" it in two arcs placed at different heights. This figure reveals how a container (8) advancing along the conveyor chain (9), upon reaching the position of any of said pushing means (23), e.g. the position of inserting head (27), is urged against the guide means (24) and is kept perfectly upright by the location of said guide. As previously stated, retention of the container (8) in this position is determined by and associated braking device.

In the course of operating the machine of the invention, passing sensors (14 to 18) play a decisive role in determining the machine's work sequence. Thus, initially the braking mechanisms (10, 11, 12, 13) are deactivated, i.e. in a retracted position, and do not therefore interfere in the path of the containers containing pressurized gas. When a first container nears the seal installing position, its passing acts on sensor (14) which however causes no change in the position of the brakes (10 to 13), although when it passes in front of sensor (15), thereby acting on it, this in turn activates brake (12), which extends its arm and stops the container at a position opposite inserting head (27'). In this position, the container is acting on sensor (16), which activates braking mechanism (11). Thus, the second arriving container is retained by the braking mechanism (11) under inserting head (27), so that, while in this position, sensor (15) is activated and this in turn activates braking mechanism (10) in order to prevent the new containers advancing along chain (9) from reaching container (31) and also acts on the pushing elements (23) opposite both seal inserting positions. With both containers located in their respective positions and both sensors (14) and (15) simultaneously activated, the seal inserting cycle - one seal for each container -is initiated with the lowering of heads (27, 27') fitted to arms (5, 5'), as previously described.

Following the seal inserting operation, the container pushing-centering means (23) withdraws and the braking mechanism (12) opens, both simultaneously, thereby releasing the first container and allowing the chain (9) to advance it to the position of arm (22), where it is stopped by brake (12) and pushed by the associated means (23) against rear guide (24). Subsequently, the seal presence checking head (34) descends and, based on the data obtained (whether or not a seal is present), the container is released and sent along the direction of arrows A or B, as appropriate. The second container is then released, and undergoes this same operation. Machine entry brake (10) then retracts, a new pair of containers (8) is allowed to pass and the cycle is resumed.

The braking devices (10, 11, 12, 13), the arm (36) in the ejecting mechanism (19) and the extensible rods (38) in each pushing element (23) are preferably activated by pneumatic cylinders. However, this fact must in no way be interpreted as a limiting factor since such movements could equally be carried out by means of hydraulic cylinders or electrical mechanisms such as direct or alternate current motors, or simply by stepping motors, without essentially altering the invention.

Figure 5 shows a diagram of the operational sequence of the machine of the invention. This diagram is discussed hereunder in the form of an example of an embodiment, although naturally it is subject to working modifications depending on the requirements of each application without leaving the scope of the invention. This description contemplates a fully automatic work cycle for the machine.

Likewise, in order to understand the symbols in this diagram, the general meaning of each symbol is as follows:
- symbols F1 - F4 identify the braking elements shown in Figure 1 as (10 to 13), respectively;
- symbols C1 - C4 identify the cylinders associated to braking elements F1 - F4, respectively;
- symbols C6 - C8 identify the cylinders associated to pushing means (23) shown in Figure 1, respectively those opposite arms (5, 5', 22);
- symbols DP identify the triggering devices for the various cylinders to which they are associated; and
- symbols SP01 -SP05 refer, respectively, to the sensors (14 - 18) shown in Figure 1.

The remaining symbols are shown clearly associated to the corresponding part of the machine, according to the diagram in Figure 5.

It must further be borne in mind that, throughout the work sequence, the use of the term "ON" means that an element is activated; the use of the term "OFF" means that the element is deactivated.

### INITIAL CONDITIONS

### STEP 0

### CONDITIONS

- Emergency stop pushbuttons DEACTIVATED
- Air pressure > 5 bars: CLP1 CLOSED
- Manual/automatic selector: AUTOMATIC
- Feeder run/stop selector: RUN
- ACTION pushbutton, RESET

### ACTIONS

- Machine entry brake F1, CLOSE: C1 RETRACT
- Inserting position 1 brake F2, OPEN: C2 EXTEND
- Inserting position 2 brake F3, OPEN: C3 EXTEND
- Presence control brake F4, OPEN: C4 EXTEND
- Rollers RC1, insertion 1: C6 RETRACT
- Rollers RC2, insertion 2: C7 RETRACT
- Presence control brake F4, OPEN: C4 EXTEND
- Rollers RC1, insertion 1: C6 RETRACT
- Rollers RC2, insertion 2: C7 RETRACT
- Presence control rollers RC3: C8 RETRACT
- Presence control head, high: C9 RETRACT
- Seal distributor to ramps: C12 RETRACT
- Inserting arm 1 to vertical: C13 RETRACT
- Inserting arm 2 to vertical: C14 RETRACT
- Inserting head 1, high: CE15 RETRACT
- Inserting head 2, high: CE16 RETRACT
- Seal introducing element in head 1: C10 RETRACT
- Seal introducing element in head 2: C11 RETRACT
- Defective container diverter (DD): C5 RETRACT
- Feed-orientation motor, RUN: EV15 - ON
- Auxiliary air entry, ACTIVATE: EV14 - ON
- Max time under presence control time, low position (Tpc): RESET
- Saturation timer (Tps): RESET
- Feed motor running timer: RESET
NOTE - None of the actions in Step 0 may be executed with air pressure < 5 bar.

### START OF INSERTING PROGRAM BLOCK

### STEP 1

### CONDITIONS

- Emergency stop pushbuttons DEACTIVATED
- Air pressure > 5 bars: CLP1 CLOSED
- Manual/automatic selector: AUTOMATIC
- Feeder run/stop selector: RUN
- Machine entry brake F1, CLOSED: C1 RETRACTED
   DP2 - OFF
- Inserting position 1 brake F2, OPEN: C2 EXTENDED
   DP4 - ON
- Inserting position 2 brake F3, OPEN: C3 EXTENDED
   C3 EXTENDED
   DP6 - ON
- Presence control brake F4, OPEN: C4 EXTENDED
   DP7 - ON
- Rollers RC1, insertion 1, RETRACTED C6 RETRACTED
   DP10 - ON
- Rollers RC2, insertion 2, RETRACTED C7 RETRACTED
   DP12 - ON
- Rollers RC3, presence control, RETRACTED C8 RETRACTED
   DP14 - ON
- Presence control head, high: C9 RETRACTED
   DP27 - ON
   FC5 - OFF
   CLP2 - OFF
- Seal distributor to ramps RETRACTED C12 RETRACTED
   DP24 - ON
   DP23 - OFF
- Inserting arm 1, vertical: C13 RETRACTED
   DP22 - ON
   DP21 - OFF
- Inserting arm 2, vertical: C14 RETRACTED
   DP20 - ON
   DP19 - OFF
- Inserting head 1, high: CE15 RETRACTED
   FC2 - ON
   FC1 - OFF
- Inserting head 2, high: CE16 RETRACTED
   FC4 - ON
   FC3 - OFF
- Seal introducing element C10 RETRACTED
   in inserting head 1: DP16 - ON
   DP15 - OFF
- Seal introducing element C11 RETRACTED
   in inserting head 2: DP18 - ON
   DP17 - OFF
- Defective container diverter C5 RETRACTED
   (DD) RETRACTED: DP25 - OFF
   DP26 - ON
- Saturation timer (Tps): OFF
- SP1 presence sensor, DEACTIVATED: SP1 - OFF
- SP2 presence sensor, DEACTIVATED: SP2 - OFF
- SP3 presence sensor, DEACTIVATED: SP3 - OFF
- SP4 presence sensor, DEACTIVATED: SP4 - OFF
- ACT ON PUSHBUTTON TO START CYCLE

### ACTIONS

- ACTIVATE counter K1 (2-bottle passage detection towards insertion posts by means of sensor SP1)
- Machine entry brake F1, OPEN: C1 EXTEND
- Inserting arm 1 tilt: C13 EXTEND
- Inserting arm 2 tilt: C14 EXTEND
- Feeder operation timer, ACTIVATE: Tpa - SET

### STEP 2

### CONDITIONS

- Machine entry brake F1, OPEN: C1 EXTENDED
   DP2 - ON
- Inserting arm 1 in seal inserting C13 EXTENDED
   point in head 1: DP22 - OFF
   DP21 - ON
- Inserting arm 2 in seal inserting C14 EXTENDED
   point in head 2: DP20 - OFF
   DP19 - ON

### ACTIONS

- Seal inserter in inserting head 1: C10 EXTEND
- Seal inserter in inserting head 2: C11 EXTEND

### STEP 3

### CONDITIONS

- Seal inserter in inserting head 1: C10 EXTENDED
   DP16 - OFF
   DP15 - ON
- Seal inserter in inserting head 2: C11 EXTENDED
   DP18 - OFF
   DP17 - ON
- Seal distributor to ramps: C12 RETRACTED
   DP24 - ON
   DP23 - OFF

### ACTIONS

- Seal inserter in inserting head 1: C10 RETRACT
- Seal inserter in inserting head 2: C11 RETRACT
- Seal distributor to ramps: C12 EXTRACT

### STEP 4

### CONDITIONS

- Seal inserter in inserting head 1: C10 RETRACTED
   DP16 - ON
   DP15 - OFF
- Seal inserter in inserting head 2: C11 RETRACTED
   DP18 - ON
   DP17 - OFF
- Seal distributor to ramps: C12 EXTENDED
   DP24 - OFF
   DP23 - ON

### ACTIONS

- Inserter arm 1, return to vertical: C13 RETRACT
- Inserter arm 2, return to vertical: C14 RETRACT
- Seal distributor to ramps: C12 RETRACT
- Feeder run timer (Tpa) RESET: Tpa - RESET

### STEP 5

### CONDITIONS

- Container presence
   in inserting position 2: SP2 - ON

### ACTIONS

- Brake F3, CLOSE: C3 RETRACT
- Centering rollers RC2, ADVANCE: C7 EXTEND

### STEP 6

### CONDITIONS

- Container presence
   in inserting position 1: SP1 - ON
- Counter K1: K1 = 2

### ACTIONS

- Brake F2, CLOSE: C2 RETRACT
- Centering rollers RC1, ADVANCE: C6 EXTEND
- Brake F1, CLOSE: C1 RETRACT

### STEP 7

### CONDITIONS

- Container presence
   in inserting position 1: SP1 - ON
- Container presence
   in inserting position 2: SP2 - ON
- Inserter arm 1 vertical: C13 RETRACTED
   DP22 - ON
   DP21 - OFF
- Inserter arm 2 vertical: C14 RETRACTED
   D20 - ON
   D19 - OFF

### ACTIONS

- Inserting head 1 in low position: CE15 EXTEND
- Inserting head 2 in low position: CE16 EXTEND
- Set counter K1 to zero: K1 - RESET

### STEP 8

### CONDITIONS

- Inserter arm 1 vertical: C13 RETRACTED
   DP22 - ON
   DP21 - OFF
- Inserter arm 2 vertical: C14 RETRACTED
   DP20 - ON
   DP19 - OFF
- Inserting head 1 low: CE15 EXTENDED
   FC2 - OFF
   FC1 - ON
- Inserting head 2 low: CE16 EXTENDED
   FC4 - OFF
   FC3 - ON

### ACTIONS

- Inserting head 1 to high position: CE15 RETRACT
- Inserting head 2 to high position: CE16 RETRACT

### STEP 9

### CONDITIONS

- Inserter arm 1 vertical: C13 RETRACTED
   DP22 - ON
   DP21 - OFF
- Inserter arm 2 vertical: C14 RETRACTED
   DP20 - ON
   DP19 - OFF
- Inserting head 1 high: CE15 RETRACTED
   FC2 - ON
   FC1 - OFF
- Inserting head 2 high: CE16 RETRACTED
   FC4 - ON
   FC3 - OFF

### ACTIONS

- Brake F3, OPEN: C3 EXTEND
- Centering rollers RC2, MOVE BACK: C7 RETRACT
- Brake F2, OPEN: C2 EXTEND
- Centering rollers RC1, MOVE BACK: C6 RETRACT
- Inserter arm 1, tilt to point 1 for
   introducing seal in head: C13 EXTEND
- Inserter arm 2, tilt to point 2 for
   introducing seal in head: C14 EXTEND
- Brake F1, OPEN: C1 EXTEND
- ACTIVATE counter K1 K1 - SET
- ACTIVATE feeder operation timer Tpa - SET

### THE CYCLE RESTARTS IN STEP 2

NOTE - At the entry point in each secondary ramp (4, 4'), passage of the preceding seals coming from the main exit ramp or guide (2) leaving the feeder-orienting device (1) is facilitated by blowing a controlled air jet. The operating control of the blowing devices is synchronized with that of the pneumatic cylinder which activates the distributor (3) of the seals going to the secondary ramps (4, 4'). In each of the two cylinder air entries, i.e. at the spring operated return distributor outlets acting on the cylinder, a command signal is obtained and led to one of the two entries of an "&" cell, the second entry of which is subject to permanent pressure. When both cell "&" entries corresponding to one of the cylinder air entries is under pressure, the cell's outlet is at high level (in 1), and the desired jet is thus generated.

### START OF THE "SEAL PRESENCE CHECK/CONTROL" BLOCK PROGRAM

### STEP 1:

### CONDITIONS

- Brake F4 for stopping in seal
   presence control position: C4 EXTENDED
   DP7 - ON
- Centering rollers RC3 for
   presence control, RETRACTED: C8 RETRACTED
   DP14 - ON
- Presence control head to high position: C9 RETRACTED
   DP27 - ON
   FC5 - OFF
- Presence control CONTACT "NA", OPEN: CLP2 - OFF
- Container in presence control position: SP3 - ON

### ACTIONS

- Brake for stopping in presence control position, CLOSE: C4 RETRACT
- Centering rollers RC3 for presence control, ADVANCE: C8 EXTEND

### STEP 2:

### CONDITIONS

- Brake F4 for control presence, CLOSED C4 RETRACTED
   DP7 - OFF
- Centering rollers RC3 for presence control, EXTENDED: C8 EXTENDED
   DP14 - OFF

### ACTIONS

- Presence control head, LOWER: C9 EXTEND
- Tpc timer, ACTIVATE: Tpc - SET

### STEP 3:

### A) With container reaching confirmation and seal presence control - O.K.:

### CONDITIONS

- Presence control head low position: C9 EXTENDED
   DP27 - OFF
   FC5 - ON
- Presence control "NA" contact, OPEN: CLP2 - OFF
- Tpc timer (max time head low = 1.5 sec) Tpc - OFF
- Diverter defective (DD), RETRACTED: C5 RETRACTED
   DP25 - OFF
   DP26 - ON

### ACTIONS

- Presence control brake F4, OPEN: C4 EXTEND
- Centering rollers RC3 for presence control, GO BACK: C8 RETRACT
- Presence control head, GO UP: C9 RETRACT
- Tpc timer, DEACTIVATE: Tpc - RESET

### AFTER ACTING ON A NON DEFECTIVE CONTAINER, THE CYCLE RESTARTS IN STEP 1

### B) With container reaching confirmation and seal presence control = Defect:

### STEP 3 + ID (inserting defect):

### CONDITIONS

- Presence control head low: C9 EXTENDED
   DP27 - OFF
   FC5 - ON
- Tpc timer (max time head low = 1.5 sec) Tpc - OFF
- Tpc timer (max time head low = 1.5 sec) Tpc - OFF
- Presence control "NA" contact, CLOSED: CLP2 - ON
- Tpc timer (max time head low = 1.5 sec) Tpc - OFF
- Diverter defective (DD), RETRACTED: C5 RETRACTED
   DP25 - OFF
   DP26 - ON

### ACTIONS

- Relay rmD, ACTIVATE (250 ms impulse) rmD - ON
   t = 250 ms
   rmD - Off
- Presence control position brake, OPEN: C4 EXTEND
- Centering rollers RC3 for presence control, GO BACK: C8 RETRACT
- Presence control head, GO UP: C9 RETRACT
- Tpc timer, DEACTIVATE: Tpc - RESET

### STEP 4 + DI

### CONDITIONS

- Presence of next defective container in seal presence control position: SP3 - ON

### ACTIONS

- Brake in presence control position, CLOSE: C4 RETRACT
- Centering rollers RC3, ADVANCE: C8 EXTEND

### STEP 5 + DI

### CONDITIONS

- Presence of next defective container in defective diverting position: SP4 - ON

### ACTIONS

- Diverter defective, ADVANCE: C5 EXTEND

### STEP 6 + DI

### CONDITIONS

- Diverter defective EXTENDED:: C5 EXTENDED DP25 - ON
   DP26 - OFF

### ACTIONS

- Diverter defective, GO BACK: C5 RETRACT

### AFTER DIVERTING A DEFECTIVE CONTAINER, THE CYCLE RESTARTS IN STEP 2 OF THE "SEAL PRESENCE CHECK/CONTROL" BLOCK PROGRAM

### C) Container reached, confirmation failure

In the event of a stoppage in the conveyor chain (9) carrying the containers (8) after sensor SP3 is activated (SP3 - ON) - but before the container is fully positioned under seal insertion check/presence control head (34) - the descending head will not contact the container head.

After 1.5 sec, the Tpc timer generates a defect signal designed to prevent an uncontrolled restart of the conveyor (9) from causing the container to impact against said check/control head (34). If such is the case, the following step is executed:

### STEP 3 + DA (Container reach defect)

### CONDITIONS

- Tpc - ON
- CLP2 - OFF

### ACTIONS

- Presence control head, GO UP: Tpc - RESET

The automatic cycle is interrupted and may no be restarted until the following actions are taken:
1. Press the emergency stop pushbutton.
2. Reset the emergency stop pushbutton.
3. Remove all the containers present in the length of the conveyor chain affected by the inserting machine.
4. Press the RESET pushbutton.
5. Press the START CYCLE pushbutton.

### "SATURATION TREATMENT" BLOCK PROGRAM

a) Saturation at machine exit: In the event of saturation at the machine's exit point, a situation which is detected by the "ON" position exceeding 3 seconds (Tps timer) in SP5 sensor (i.e. sensor (20) in Figure 1) located on a side of the conveyor, operation of the machine is inhibited both in the manual and in the automatic mode, blocking the stop brake and the centering rollers RC3 of the insertion check/presence control post in "closed" position (namely position F4, reference (13), in Figure 1). Once the saturation condition is solved (and SP5 passes from "ON" to "OFF"), the machine immediately resumes its manual or automatic cycle(s).
b) Saturation in the defective container diverting path: In the event of saturation in the defective container diverting path, said situation is detected through sensor SP6 (reference (21) in Figure 1), located on a side of the roller route, continuous operation of the machine being inhibited or resumed in exactly the same way by means of the same Tps timer.

Tps timer is activated when SP5 or SP6 are in "ON"; it is reset when neither SP5 nor SP6 are in "ON".

A more extensive description of the invention is considered unnecessary for enabling an expert on the subject to develop and accomplish an embodiment of said invention.

Nonetheless, the object proposed by the invention may be subject to variations in size or in the manufacturing materials without altering in the least the essential nature of said invention.

## Claims

1. Seal installing machine, preferably for containers containing pressurized gas, particularly for containers containing petroleum-derived liquid gases, comprising a hopper for storing seals oriented in a conventional manner, with their mouths directed upwards and therefore in an inverted position in relation to their inserting position, characterized by the fact that from said hopper (1) extends a guide (2) along which said seals descend and in which their position is inverted by submitting them to 180° rotation provided by the guide (2) itself, which guide ends in its lower portion on a distributor element (3) from which extend two secondary guides (4, 4'), one from each end thereof, in a manner that the seals descend along said guides (4, 4') until they reach the end of said guides to a location opposite the shanks associated to two pneumatic cylinders (33, 33'), the seals (28) thereafter being collected from this latter position by means of pivoting arms (5, 5').

2. Seal installing machine, preferably for containers containing pressurized gas, according to claim 1, characterized in that said arms (5. 5') have a tilting motion and are attached at an intermediate point to a bar (25, 25') in the machine's structure, the upper end of each of said arms being attached to the shank of a pneumatic cylinder (26, 26'), the lower end of each arm being fitted with a hollow inserting head (27, 27') capable of receiving and retaining the seal (28) to be inserted, each head (27, 27') being capable of vertical movement as a result of the action of a pneumatic cylinder (29, 29') associated to each arm (5, 5').

3. Seal installing machine, preferably for containers containing pressurized gas, according to claims 1 and 2, characterized in that the action of the pneumatic cylinder (26, 26') on the upper end of the corresponding arm (5, 5') positions said arm in such a way that its lower head (27, 27') is exactly opposite the lower end of the respective guide (4, 4') wherein the last seal is located, said seal being inserted in head (27, 27') by means of the shank associated to cylinder (33, 33') under guide (4, 4'), pushing the seal until it occupies a position (28) inside the corresponding inserting head.

4. Seal installing machine, preferably for containers containing pressurized gas, according to claims 1 to 3, characterized in that further along both inserting arms (5, 5'), in the advancing direction of containers (8), a third arm (22) is provided, fitted with a head (34) for checking the presence and attachment of the seal over the respective container valve, this head being capable of vertical ascending/descending movement preferably through an associated pneumatic cylinder (35).

5. Seal installing machine, preferably for containers containing pressurized gas, according to claim 4, characterized in that said head (34) for controlling the presence and attachment of the seal is capable of receiving inside it the part of the valve which carries the seal, urged against respective electrically conducive plates.

6. Seal installing machine, preferably for containers containing pressurized gas, according to claims 1 to 4, characterized in that a set of passing sensors (13 to 18) is provided which is activated by the containers themselves as they proceed along their path and which act on braking mechanisms (10 to 13) and an ejecting mechanism (19) fitted with a pushing arm (36) a manner that said sensors determine the action of the braking mechanisms (10 to 13) for initially retaining two containers under arms (5, 5') and subsequently under a third arm (22) fitted to the machine so that said container valves are positioned respectively opposite heads (27, 27', 34) of said arms (5, 5', 22) for correctly inserting the seals (28) in said valves and for checking the presence and attachment of the seals over said valves, one of these braking mechanisms (10) further serving to prevent the entry of new containers while the two containers in question are in their respective inserting and subsequent seal presence checking positions, and furthermore said sensors (13 to 18) determine the action of the ejecting mechanism (19) when a container is devoid of its corresponding seal (28) when it reaches, along its course, a position opposite said ejecting mechanism, is pushed transversely by pushing arm (36) and is sent along another direction for recovery.

7. Seal installing machine, preferably for containers containing pressurized gas, according to claims 1 to 6, characterized in that pushing-centering means (23) are provided for the containers located opposite said seal installing arms (5, 5') and seal presence and attachment check arm (22), consisting of longitudinal overlapping elements (39, 39') with undercut front profiles, each being provided with end rollers which urge the corresponding container, by means of two arcs vertically separated a preset distance from each other, against a rear guide (24), thereby determining the perfectly upright and centered condition of the container in each operating position opposite the corresponding arm head (27, 27', 34).
